# EUROPÄISCHE PATENTSCHRIFT

(11) **EP 0 820 831 B1**
(45) Veröffentlichungstag und Bekanntmachung des Hinweises auf die Patenterteilung: **14.04.1999**
(21) Anmeldenummer: 97112844.2
(22) Anmeldetag: 25.07.1997
(51) Int. Cl.: B23K 9/04, F16J 9/22

(54) **Verfahren zur Herstellung von verschleissbeständigen Oberflächen an Ringnutbereichen von Kolben aus Aluminiumwerkstoffen; Kolben für Brennkraftmaschinen**
Method for forming wear resistant facings on ring groove areas of pistons of aluminium materials; piston for combustion engines
Procédé pour former des surfaces résistantes à l'usure dans des rainures annulaires de pistons en matériau d'aluminium; piston pour moteurs à combustion

(30) Priorität: 26.07.1996 DE 19630197
(43) Veröffentlichungstag der Anmeldung: 28.01.1998
(73) Patentinhaber: KS Kolbenschmidt GmbH, 74172 Neckarsulm (DE)
(72) Erfinder: Mielke, Siegfried, 74172 Neckarsulm (DE)
(74) Vertreter: Dreiss, Fuhlendorf, Steimle & Becker

(56) Entgegenhaltungen:
- DE-A- 3 246 630
- DE-A- 3 339 867
- PATENT ABSTRACTS OF JAPAN vol. 014, no. 428 (M-1025), 14.September 1990 & JP 02 169182 A (ATSUGI UNISIA CORP), 29.Juni 1990,

## Beschreibung

Die Erfindung betrifft ein Verfahren zur Herstellung von verschleißbeständigen Oberflächen an Ringnutbereichen von Kolben aus Aluminium-Silizium-Legierung, wobei durch Aufschmelzlegieren einer Aluminium-Silizium-Legierung im Lichtbogenschweißverfahren eine Schweißraupe aufgetragen wird.

Mit dem aus der DE 32 46 630 C2, der JP-A-21 69 182 und der DE 33 39 867 C2 und auch aus der EP 0 095 604 B1 an sich bekannten Aufschmelzlegieren von Ringnutbereichen, vorzugsweise des ersten Ringnutbereichs, soll eine Verstärkung erreicht werden, ohne dass ein Eisen- oder Stahlringträger bei der Herstellung des Kolbens eingegossen werden muss. Gemäß der DE 33 39 867 C2 werden im sogenannten Zweidrahtverfahren am Markt verfügbare (eutektische) Aluminium-Silizium-Drähte und nickel- und/oder kupferhaltige Drähte als Elektroden verwendet. Diese Elektroden werden im Lichtbogenschweißverfahren aufgeschmolzen, und unter Drehung des Kolbens um seine Kolbenachse wird die vorgegossene Ringnut mit dem geschmolzenen Elektrodenmaterial aufgefüllt. Dabei kommt es im Schweißgefüge zu einer Verdünnung hinsichtlich Silizium. Die für die Verschleißfestigkeit bedeutsamen primär ausgeschiedenen Silizium-Kristalle werden nicht oder in geringerem Maße gebildet. Daher waren bisher Kolben mit einem aufschmelzlegierten Ringnutbereich für höhere Beanspruchungen, wie sie Kolben für Dieselmotoren ausgesetzt sind, nicht geeignet.

Mit der JP-A 21 69 182 A wird vorgeschlagen, beim Aufschmelzlegieren von Ringnuten ein Füllmaterial aus Aluminium-Silizium-Legierung zu wählen mit hohem Nickel- und Kupfergehalt, damit sich harte intermetallische Phasen auf Nickel-Aluminium-Basis sowie primär ausgeschiedene Silizium-Kristalle ausbilden können.

Aus der CH 686 187 A5 ist ein Verfahren bekannt zum laserinduzierten Einschmelzen eines Pulvergemischs aus Siliziumcarbidpartikeln, Siliziumpulver und vorlegiertem AlSi-Pulver auf eine im Hinblick auf ihre Verschleißfestigkeit zu verbessernde Aluminiumsubstratoberfläche zur Bildung einer Metall-Matrix-Verbundschicht. Im Vordergrund stehen die Einbindung der keramischen Siliziumcarbidpartikel in die aufgeschmolzene Oberflächenschicht. Um eine Reaktion des SiC mit Aluminium zu Aluminiumcarbid (Al₄C₃) zu verhindern, wird Silizium, bevorzugt zu mehr als 20 Gew. %, zugesetzt. Zum Auffüllen einer Kolbenringnut wäre das Verfahren oder das Pulvergemisch nicht geeignet.

Der vorliegenden Erfindung liegt die Aufgabe zugrunde, das Verfahren der eingangs beschriebenen Art dahingehend zu verbessern, dass die genannten Nachteile nicht auftreten und der Kolben durch verstärkte Ausbildung primärer Silizium-Ausscheidungen eine hohe Verschleißfestigkeit aufweist. Das Verfahren soll desweiteren auf wirtschaftliche Weise durchführbar sein. Desweiteren soll ein Kolben mit verbesserter Verschleißbeständigkeit des aufschmelzlegierten Ringnutbereichs geschaffen werden.

Diese Aufgabe wird durch ein Verfahren der eingangs beschriebenen Art gelöst, das dadurch gekennzeichnet ist, dass beim Lichtbogenschweißen in das flüssige Schmelzbad oder direkt in den Lichtbogen legiertes oder unlegiertes Kupferpulver, Siliziumpulver oder eine Mischung aus legiertem oder unlegiertem Kupferpulver und Siliziumpulver eingebracht wird.

Durch das Einstreuen des Kupferpulvers in das Schmelzbad oder den Lichtbogen wird der eutektische Punkt der aufzuschmelzenden Aluminium-Silizium-Legierung so verändert, dass Silizium auch bei verhältnismäßig geringen Silizium-Gehalten blockig, also primär ausgeschieden wird. Dies erweist sich im sogenannten Eindrahtverfahren als vorteilhaft, wenn mit einer einzigen eutektischen AlSi-Elekrode gearbeitet wird. - Wenn Siliziumpulver oder eine Mischung aus Kupfer- und Siliziumpulver eingebracht wird, so wird hierdurch das Schmelzgefüge des durch Abschmelzen des oder der Elektroden erhaltenen Füllmaterials derart mit Silizium "angereichert", dass sich verstärkt Siliziumkristalle primär ausscheiden. Durch das Einstreuen des Pulvers wird dem Schmelzbad auch Wärme entzogen, so dass eine rasche Abkühlung unter Ausbildung eines sehr feinkörnigen Gefüges erreicht wird.

Beim Aufschmelzlegieren werden vorteilhafterweise Nickel und/oder Kupfer in Form der erschmolzenen Elektroden zulegiert, um die Härte und Verschleißbeständigkeit der Oberfläche des Ringnutbereichs durch die hierbei entstehenden intermetallischen Phasen zu erhöhen.

Da ein feinkörniges Gefüge eine höhere Duktilität aufweist als ein grobkörniges, kann daher der Anteil am Nickel oder Kupfer, d.h. der Anteil an verschleißbeständigen intermetallischen Phasen im Gefüge erhöht werden, ohne dass es nach dem Schweißen zu Rissen in der Schweißraupe kommt.

Besonders vorteilhafte Ergebnisse wurden durch Einbringen von Pulver mit einer Körnung von 45 bis 75 µm erreicht.

Bevorzugt findet das Zweidraht-Schweißverfahren Verwendung. Es können aus eutektischen Aluminium-Silizium-Legierungen bestehende Drähte, welche am Markt verfügbar sind, sowie aus Nickel- und/oder Kupfer-Legierungen bestehende Drähte als Elektroden verwendet werden.

Die eingestreute Pulvermenge wird vorteilhafterweise derart bemessen, dass sich im aufschmelzlegierten Ringnutbereich eine Aluminium-Silizium-Legierung bildet, deren Siliziumgehalt 10, vorzugsweise 13 Gew.-% oder mehr beträgt. Silizium wird dann primär oder blockig ausgeschieden, was die Verschleißfestigkeit erhöht.

In Weiterbildung der Erfindung werden zusätzliche Legierungselemente mit dem Pulver eingebracht bzw. eingestreut. Als zusätzliches Legierungselement kann beispielsweise Mangan zugegeben werden, oder es kann ein Kornfeinungsmittel, insbesondere Titanbor oder Zirkon, zugegeben werden.

Desweiteren kann es vorteilhaft sein, wenn mit dem Pulver ein Material eingebracht wird, das mit dem Schmelzbad nur wenig oder gar nicht reagiert, wie zum Beispiel grobes Eisenpulver.

Im aufschmelzlegierten Ringnutbereich weist ein erfindungsgemäß hergestellter Kolben primär oder blockig ausgeschiedenes Silizium auf.

Wird ein Kolben aus der Aluminium-Silizium-Legierung AlSi12CuMg, also einer eutektischen Legierung hergestellt, so kommt es beim Aufschmelzlegieren notwendigerweise zu einer Verarmung der Siliziumphase, wenn im Zweidrahtverfahren zu der eutektischen Aluminium-Silizium-Elektrode noch eine zusätzliche Elektrode erschmolzen bzw. dazulegiert wird. Wird nach der Erfindung eine Mischung aus Kupfer- und Siliziumpulver eingestreut, so ist der Silizium-Gehalt gegenüber dem siliziumgehalt der Aluminium-Silizium-Legierung des Kolbenwerkstoffs im aufschmelzlegierten Bereich nicht verringert; auch in diesem Bereich liegt primär oder blockig ausgeschiedenes Silizium vor.

Beim Aufschmelzlegieren kann auch eine solche Menge Siliziumpulver eingestreut werden, dass der aufschmelzlegierte Ringnutbereich ein übereutektisches Gefüge aufweist.

Es wird ausdrücklich darauf hingewiesen, dass vorteilhafte Ergebnisse im besonderen bei der Anwendung des Zweidrahtverfahrens auch erzielt werden, wenn kein Kupferpulver sondern nur Siliziumpulver in das Schmelzbad oder den Lichtbogen eingebracht wird.

Weitere Merkmale, Einzelheiten und Vorteile der Erfindung ergeben sich aus den Schutzansprüchen und der beigefügten Zeichnung und nachfolgenden Beschreibung der Erfindung. In der Zeichnung zeigt:
- Figur 1: eine schematische Darstellung einer erfindungsgemäßen Vorrichtung zum Aufschmelzlegieren einer vorgegossenen Ringnut;
- Figur 2: ein Schliffbild des Gefüges in einem aufschmelzlegierten Ringnutbereichs eines Kolbens.

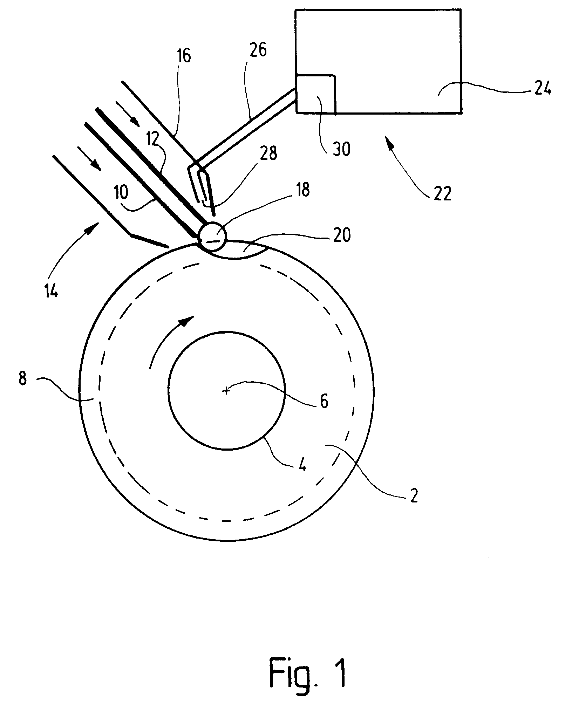

Figur 1 zeigt in schematischer Darstellung eine Vorrichtung zum Aufschmelzlegieren einer vorgegossenen Ringnut eines Kolbens 2 für eine Brennkraftmaschine. Die Vorrichtung umfasst eine Handhabungseinrichtung 4, mit der der zu bearbeitende Kolben 2 in horizontaler Richtung gehalten und um seine Kolbenachse 6 gedreht werden kann. Dabei wird der Kolben 2 vorzugsweise von innen gekühlt. Unmittelbar oberhalb des Kolbens 2 im Bereich der vorgegossenen Ringnut 8 sind Schweißelektroden 10, 12 einer insgesamt mit dem Bezugszeichen 14 bezeichneten Lichtbogenschweißeinrichtung positionierbar. Die Elektrode 10 kann beispielsweise aus einer Aluminiumlegierung, vorzugsweise AlSi12, und die Elektrode 12 aus einer Nickel- und/oder Kupferlegierung bestehen. Die Elektroden 10, 12 sind von einer Schutzgasführung 16 umgeben, mit der im Bereich des Lichtbogens 18 bzw. im Bereich des Schmelzbads 20 ein Schutzgasschleier erzeugt wird. Hierfür ist nur eine sehr geringfügige Strömungsgeschwindigkeit des Schutzgases erforderlich. Es kommt zu keinen unerwünschten Turbulenz- oder Wirbelbildungen.

Es ist desweiteren eine mit dem Bezugszeichen 22 bezeichnete Zuführeinrichtung für eine Mischung aus Kupfer- und Siliziumpulver vorgesehen, die einen oberhalb der Kolbenmantelfläche vorgesehenen schematisch dargestellten Vorratsbehälter 24 aufweist, von dem ein rohr- oder rinnenförmiger Zuführabschnitt 26 wegführt. Der Zuführabschnitt 26 weist eine oberhalb der Enden der Elektroden 10, 12 und damit oberhalb des Lichtbogens 18 bzw. des Schmelzbads 20 angeordnete Mündung 28 auf. Unter Ausnützung der Schwerkraft rutscht oder rieselt das Pulver aus dem Vorratsbehälter 24 durch den Zuführabschnitt 26 und wird durch die Mündung 28 abgegeben und in das Schmelzbad 20 eingestreut. Mit dem Bezugszeichen 30 ist eine schematisch angedeutete Dosiervorrichtung bezeichnet.

Durch die Zugabe des Pulvers in das Schmelzbad 20 wird eine Erhöhung des Siliziumgehalts erreicht und der eutektische Punkt wird so verschoben, dass sich auch bei geringeren SiKonzentrationen primäre Silizium-Ausscheidungen bilden. Das eingestreute Kupferpulver bildet intermetallische Phasen (Kupferaluminid) und es wird primär ausgeschiedenes Silizum gebildet, welches die Verschleißfestigkeit des aufschmelzlegierten Ringnutbereichs erhöht.

Durch die Zugabe von Kupfer- und Siliziumpulver sowie durch das Zulegieren der nickel- und/oder kupferhaltigen Legierung durch die zweite Schweißelektrode wird der Anteil der Aluminiummatrix im Schweißgefüge reduziert und damit die Verschleißfestigkeit und Härte des aufschmelzlegierten Ringnutbereichs erhöht.

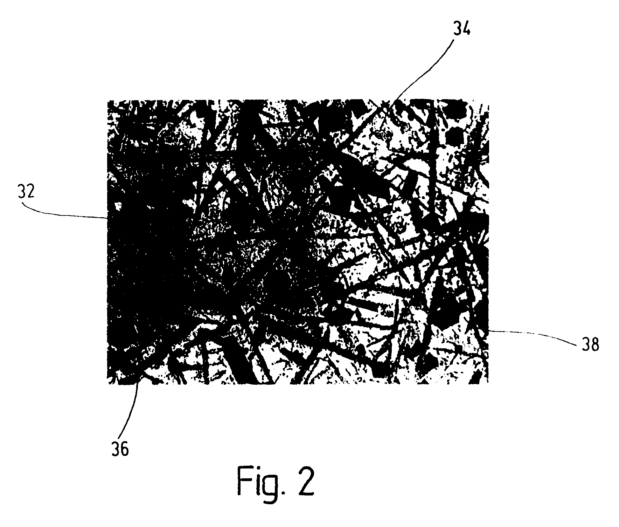

Figur 2 zeigt ein Schliffbild des Gefüges in einem erfindungsgemäß aufschmelzlegierten Ringnutbereich. Man erkennt primär und blockig ausgeschiedenes Silizium 32 sowie die mehr oder weniger stabförmig ausgeschiedenen intermetallischen Phasen Nickel- und Kupferaluminid 34 bzw. 36. Durch die Zugabe von Siliziumpulver sowie durch das Zulegierung der nickel- und/oder kupferhaltigen Legierung durch die zweite Schweißelektrode wird der Anteil der Alumiummatrix 38 im Schweißgefüge reduziert und damit die Verschleißfestigkeit und Härte des aufschmelzlegierten Ringnutbereichs erhöht.

## Patentansprüche

1. Verfahren zur Herstellung von verschleißbeständigen Oberflächen an Ringnutbereichen von Kolben (2) aus Aluminium-Silizium-Legierung, wobei durch Aufschmelzlegieren einer Aluminium-Silizium-Legierung im Lichtbogenschweißverfahren eine Schweißraupe aufgetragen wird**, dadurch gekennzeichnet**, dass beim Lichtbogenschweißen in das flüssige Schmelzbad (20) oder direkt in den Lichtbogen (18) legiertes oder unlegiertes Kupferpulver, Siliziumpulver oder eine Mischung aus legiertem oder unlegiertem Kupferpulver und Siliziumpulver eingebracht wird.

2. Verfahren nach Anspruch 1, dadurch gekennzeichnet, dass das Pulver unter Ausnutzung der Schwerkraft eingebracht wird.

3. Verfahren nach Anspruch 1 oder 2, dadurch gekennzeichnet, dass das Pulver eine Körnung von 45 - 75 µm aufweist.

4. Verfahren nach einem der vorstehenden Ansprüche, dadurch gekennzeichnet, dass zum Aufschmelzlegieren eine Elektrode (10) aus einer eutektischen Aluminium-Silizium-Legierung, insbesondere AlSi12, verwendet wird.

5. Verfahren nach einem der vorstehenden Ansprüche, dadurch gekennzeichnet, dass zusätzlich zu einer Elektrode aus einem Aluminiumwerkstoff eine weitere Elektrode (12) aus Nickel NiCu30 oder aus CuMn12 verwendet wird.

6. Verfahren nach einem der vorstehenden Ansprüche, dadurch gekennzeichnet, dass zusätzliche Legierungselemente und Mittel zur Steuerung der Gefügeausbildung pulverförmig eingebracht werden.

7. Verfahren nach Anspruch 6, dadurch gekennzeichnet, dass als zusätzliches Legierungselement pulverförmiges Mangan oder Manganlegierung eingebracht wird.

8. Verfahren nach Anspruch 6 oder 7, dadurch gekennzeichnt, dass ein Kornfeinungsmittel, insbesondere Titanbor oder Zirkon, zugegeben wird.

9. Verfahren nach Anspruch 6, 7 oder 8, dadurch gekennzeichnet, dass pulverförmiges Phosphor oder Phosphorlegierung eingebracht wird.

10. Verfahren nach Anspruch 6, 7, 8 oder 9, dadurch gekennzeichnet, dass als zusätzliches Legierungselement pulverförmiges Eisen oder Eisenlegierung eingebracht wird.

11. Verfahren nach Anspruch 6, 7, 8, 9 oder 10, dadurch gekennzeichnet, dass als zusätzliches Legierungselement pulverförmiges Nickel oder eine Nickellegierung eingebracht wird.

12. Verfahren nach einem oder mehreren der vorstehenden Ansprüche, dadurch gekennzeichnet, dass das Kupferpulver mit Blei legiert ist.

13. Verfahren nach einem oder mehreren der vorstehenden Ansprüche, dadurch gekennzeichnet, dass das Kupferpulver mit Zinn legiert ist.

14. Verfahren nach einem oder mehreren der vorstehenden Ansprüche, dadurch gekennzeichnet, dass das Verfahren an einem Kolben aus dem Kolbenwerkstoff AlSi13Cu4Ni2MgMn ausgeführt wird.

## Claims

1. A method for producing wear-resistant surfaces in annular groove regions of pistons (2) made of aluminium/silicon alloy, in which method a weld bead is applied by fusion alloying of an aluminium/silicon alloy using the arc welding method, characterized in that alloyed or unalloyed copper powder, silicon powder or a mixture of alloyed or unalloyed copper powder and silicon powder is introduced into the liquid molten pool (20) or directly into the arc (18) during the arc welding.

2. A method according to Claim 1, characterized in that the powder is introduced by using gravity.

3. A method according to Claim 1 or 2, characterized in that the powder has a particle size of 45-75 µm.

4. A method according to one of the preceding claims, characterized in that an electrode (10) made of a eutectic aluminium/silicon alloy, in particular AlSi12, is used for the fusion alloying.

5. A method according to one of the preceding claims, characterized in that, in addition to an electrode made of an aluminium material, a further electrode (12) made of nickel, of NiCu30 or of CuMn12 is used.

6. A method according to one of the preceding claims, characterized in that additional alloying elements and means for controlling the formation of the microstructure are introduced in powdered form.

7. A method according to Claim 6, characterized in that powdered manganese or manganese alloy is introduced as additional alloying element.

8. A method according to Claim 6 or 7, characterized in that a grain refinement agent, in particular titanium boride or zircon, is added.

9. A method according to Claim 6, 7 or 8, characterized in that powdered phosphorus or phosphorus alloy is introduced.

10. A method according to Claim 6, 7, 8 or 9, characterized in that powdered iron or iron alloy is introduced as additional alloying element.

11. A method according to Claim 6, 7, 8, 9 or 10, characterized in that powdered nickel or a nickel alloy is introduced as additional alloying element.

12. A method according to one or more of the preceding claims, characterized in that the copper powder is alloyed with lead.

13. A method according to one or more of the preceding claims, characterized in that the copper powder is alloyed with tin.

14. A method according to one or more of the preceding claims, characterized in that the method is carried out on a piston made of the piston material AlSi13Cu4Ni2MgMn.

## Revendications

1. Procédé pour former des surfaces résistantes à l'usure dans des gorges de pistons (2) en alliage aluminium-silicium, dans lequel une passe de soudure est exécutée par fusion d'un alliage aluminium-silicium selon le procédé de soudure à l'arc, caractérisé en ce que du cuivre ou du silicium pulvérulent, allié ou non, ou encore un mélange de cuivre et de silicium pulvérulents, alliés ou non, est introduit dans le bain de fusion liquide (20) ou directement dans l'arc électrique (18) lors de la soudure à l'arc.

2. Procédé selon la revendication 1, caractérisé en ce que la poudre est appliquée par gravité.

3. Procédé selon la revendication 1 ou 2, caractérisé en ce que la poudre présente une granulométrie de 45 à 75 µm.

4. Procédé selon l'une des revendications précédentes, caractérisé en ce qu'il met en oeuvre, pour la fusion, une électrode (10) en un alliage eutectique aluminium-silicium, en particulier AlSi12.

5. Procédé selon l'une des revendications précédentes, caractérisé en ce qu'il met en oeuvre, en plus d'une électrode en un matériau à base d'aluminium, une autre électrode (12) en Nickel NiCu30 ou en CuMn12.

6. Procédé selon l'une des revendications précédentes, caractérisé par l'introduction, à l'état pulvérulent, d'éléments d'addition supplémentaires et de moyens permettant de déterminer la structure cristalline.

7. Procédé selon la revendication 6, caractérisé par l'introduction de manganèse ou d'un alliage de manganèse pulvérulent en tant qu'élément d'addition supplémentaire.

8. Procédé selon la revendication 6 ou 7, caractérisé par l'addition d'un moyen d'affinement du grain, en particulier du titane-bore ou du zirconium.

9. Procédé selon la revendication 6, 7 ou 8, caractérisé par l'introduction de phosphore ou d'un alliage de phosphore pulvérulent.

10. Procédé selon la revendication 6, 7, 8 ou 9, caractérisé par l'introduction de fer ou d'un alliage de fer pulvérulent en tant qu'élément d'addition supplémentaire.

11. Procédé selon la revendication 6, 7, 8, 9 ou 10, caractérisé par l'introduction de nickel ou d'un alliage de nickel pulvérulent en tant qu'élément d'addition supplémentaire.

12. Procédé selon l'une au moins des revendications précédentes, caractérisé en ce que le cuivre pulvérulent est allié au plomb.

13. Procédé selon l'une au moins des revendications précédentes, caractérisé en ce que le cuivre pulvérulent est allié à l'étain.

14. Procédé selon l'une au moins des revendications précédentes, caractérisé en ce qu'il est appliqué sur un piston réalisé dans le matériau pour piston AlSi13Cu4Ni2MgMn.
